# EUROPÄISCHE PATENTSCHRIFT

(11) **EP 2 464 603 B1**
(45) Veröffentlichungstag und Bekanntmachung des Hinweises auf die Patenterteilung: **13.01.2016**
(21) Anmeldenummer: 10748050.1
(22) Anmeldetag: 16.08.2010
(51) Int. Cl.: C02F 1/10, C02F 1/14, B01D 1/14, B01D 5/00, B01D 1/00

(54) **VERFAHREN UND VORRICHTUNG ZUR MEERWASSERENTSALZUNG**
METHOD AND DEVICE FOR DESALINATING SEA WATER
PROCÉDÉ ET DISPOSITIF DE DÉSALINISATION DE L'EAU DE MER

(30) Priorität: 14.08.2009 DE 102009037306; 25.08.2009 DE 102009038545; 01.10.2009 DE 102009043692
(43) Veröffentlichungstag der Anmeldung: 20.06.2012
(73) Patentinhaber: Lutz, Marianne, 71101 Schönaich (DE)
(72) Erfinder: SCHRADE, Eberhard, 71101 Schönaich (DE)
(74) Vertreter: Mammel und Maser
(86) Internationale Anmeldenummer: PCT/EP2010/005014
(87) Internationale Veröffentlichungsnummer: WO 2011/018242

(56) Entgegenhaltungen:
- DE-A1- 1 952 060
- DE-A1- 10 230 668
- DE-U1- 20 010 667
- US-A- 3 317 406
- US-A- 4 210 494
- US-A- 4 276 124
- US-A1- 2004 231 970
- US-A1- 2008 173 590

## Beschreibung

Die Erfindung betrifft ein Verfahren und eine Vorrichtung zur Meerwasserentsalzung.

Aufgrund des stets steigenden Bedarfs an Brauch- und Trinkwasser nimmt die Gewinnung von Trinkwasser aus Meerwasser immer mehr an Bedeutung zu. Dies beruht auch darauf, dass die Grundwasserspiegel laufend sinken und in Teilen der Erde das Grundwasser auch zunehmend kontaminiert wird. Infolge mangelnder Versorgung mit Brauch- und Trinkwasser kommt es in der Natur beispielsweise zur Trockenheit und Versteppung sowie in bevölkerungsreichen Regionen zu Nahrungsmangel und Elend.

Darüber hinaus ist bei vielen Prozessen für die Verarbeitung oder Verwertung von Materialien, insbesondere bei der Müllverwertung, der Fall gegeben, dass Resteenergien, insbesondere Restwärme, ungenutzt an die Umgebung abgegeben werden.

Aus der DE 200 10 667 U1 ist eine energiesparende Entsalzungsanlage bekannt, bei der durch die Verwendung eines im Gegenlauf arbeitenden Wärmetauschers und eines Sonnenkollektors, die in der Verdampfungskammer für die Verdampfung von Salzwasser aufgebrachte Wärmeenergie wieder gewonnen und für die Verdampfung wieder eingesetzt wird.

Aus der FR 2 322 101 ist eine Meerwasserentsalzungsanlage bekannt, welche aus zwei getrennten Kreisläufen besteht. Der eine Kreislauf bewirkt die Verdampfung des Meerwassers und der andere Kreislauf umfasst einen Kühl- oder Kältemittelkreislauf zum Betreiben des Kondensators, um das verdampfte Meerwasser zu kondensieren. Dieser separate Kältekreislauf wird mit einem Kälte- beziehungsweise Kühlmittel, wie beispielsweise Freon, betrieben. Solche Meerwasserentsalzungsanlagen weisen den Nachteil auf, dass die zusätzliche Bereitstellung eines Kältemittels sowie eine gesonderte Entsorgung erforderlich sind. Darüber hinaus ist der Aufbau solcher Meerwasserentsalzungsanlagen aufwändig. Weiterhin bedarf es der zusätzlichen Komprimierung des Kälte- beziehungsweise Kühlmittels mit einem Kompressor, um die entsprechende Kühlung zu bewirkten, das heißt, dass eine Energie von außen zugeführt werden muss.

Deshalb liegt der Erfindung die Aufgabe zugrunde, ein Verfahren und eine Vorrichtung zur Meerwasserentsalzung vorzuschlagen, welche entweder unabhängig von einer Fremdenergie oder mit einer Restenergie durchgeführt oder betrieben werden kann, die als Abfallprodukt aus einem Verarbeitungsprozess von Materialien vorliegt, welche ansonsten ungenutzt an die Umgebung abgegeben würde.

Diese Aufgabe wird erfindungsgemäß durch ein Verfahren gemäß den Merkmalen des Anspruchs 1 gelöst. Weitere vorteilhafte Ausgestaltungen und Weiterbildungen sind in den weiteren Ansprüchen angegeben. Durch das erfindungsgemäße Verfahren erfolgt eine Meerwasserentsalzung mit einer Aufheizstation, einem mit Meerwasser befüllbaren Behälter, einem Kondensator und einem Auffangbehälter oder einer Abführleitung für ein Destillat, wobei die Komponenten als ein Modul als eine gemeinsame transportable Einheit ausgebildet sind, bei dem ein Behälter mit Meerwasser befüllt wird, so dass an dessen oberen Ende ein Verdampfungsraum verbleibt, bei dem ein Luftstrom in einer dem Behälter stromauf angeordneten Aufheizstation erhitzt und in den Behälter mit Meerwasser mit einem Ventilator oder einer Pumpe eingedrückt wird, bei dem ein im Verdampfungsraum des Behälters gebildeter Dampf einem Kondensator zugeführt wird, bei dem der Kondensator über eine Ansaugleitung mit Meerwasser oder Salzwasser gespeist wird, und das angesaugte Meerwasser Kühlschlangen des Kondensators durchströmt, am Ausgang des Kondensators abgeführt und über eine Zulaufleitung dem Behälter zugeführt wird, bei dem ein an Kühlschlangen des Kondensators im Verdampfungsraum des Behälters kondensiertes Destillat aufgesammelt und gespeichert wird, bei dem ein durch den Kondensator vorgewärmtes Meerwasser dem Behälter zugeführt wird, bei dem der durch den Kondensator abgekühlte Dampf als vorgewärmter Luftstrom über einen Luftströmungskanal der Aufheizstation zugeführt wird, bei dem in der Aufheizstation der Luftstrom erhitzt und anschließend in den Behälter eingeblasen wird, der das Meerwasser durchströmt und bei dem in der Aufheizstation der Luftstrom mit regenerativer Energie oder Restenergie aus einem Verarbeitungsprozess aufgeheizt wird. Durch dieses Verfahren ist es lediglich erforderlich, eine Energie zur Aufheizung des Luftstromes bereitzustellen, um eine Meerwasserentsalzung durchzuführen. Dabei kann dieses Verfahren zur Meerwasserentsalzung entweder mittels regenerativer Energie betrieben werden oder mit einer Restenergie oder Restwärme aus anderweitigen Verfahrens- oder Verarbeitungsprozessen von Materialien. Durch den Einsatz einer erhitzten Luftströmung, weiche dem mit Meerwasser teilweise gefüllten Behälter zugeführt wird, kann in einfacher Weise die Restenergie oder Restwärme zum Aufheizen oder Erhitzen des Luftstromes eingesetzt werden. Dadurch wird ein flexibel zu betreibendes Verfahren geschaffen, welches auf bestimmte Standorte und Umgebungsbedingungen nicht beschränkt ist.

Bei dem Verfahren wird der durch den Kondensator abgekühlte Dampf als vorgewärmter Luftstrom erneut der Aufheizstation zugeführt. Dadurch kann die in dem Luftstrom noch verbleibende Restwärme nach dem Austreten aus dem Kondensator weiter genutzt werden, um einen geringeren Energiebedarf für das Erhitzen des Luftstromes aufzubringen, der dem Behälter zugeführt wird. Dadurch kann die Energiebilanz verbessert werden.

Eine weitere bevorzugte Ausgestaltung der Erfindung sieht vor, dass der Kondensator über eine Ansaugleitung mit Meerwasser oder Salzwasser gespeist wird, wobei aus einer Tiefe von wenigstens 20 m, insbesondere wenigstens 30 m oder mehr, Meerwasser oder Salzwasser angesaugt wird. Dies weist den Vorteil auf, dass das Meerwasser mit einer niedrigen Temperatur vergleichsweise zum zugeführten Dampf den Kondensator durchströmt. Beispielsweise bei einer Entnahme des Meerwassers in einer Tiefe von circa 40 m weist das Meerwasser eine Temperatur von circa 10 °C auf. Dadurch kann eine hohe Temperaturdifferenz zwischen dem den Kondensator durchströmenden Dampf und somit eine hohe Kondensationsrate erzielt werden.

Des Weiteren ist bevorzugt vorgesehen, dass das Meerwasser durch eine Pumpeinrichtung, welche zwischen einer Ansaugöffnung der Ansaugleitung und dem Kondensator positioniert ist, dem Kondensator zugeführt wird. Dadurch kann die Unabhängigkeit der Meerwasserentsalzungsanlage weiter gesteigert werden.

Eine weitere bevorzugte Ausgestaltung des Verfahrens sieht vor, dass der Luftstrom, welcher in das im Behälter bevorratete Meerwasser eingedrückt wird, auf eine Temperatur von weniger als 250 °C, vorzugsweise zwischen 110 °C und 140 °C, aufgeheizt wird. Dadurch kann ein hoher Verdunstungsgrad erzielt werden, so dass im Verdampfungsraum sich ein Dampf mit einer relativen Luftfeuchtigkeit ansammelt, der vorzugsweise 100 % Luftfeuchtigkeit aufweist, also gesättigt ist. Die Wasseraufnahme je m³ Luft ist bei einer Dampftemperatur von 100 °C am Höchsten, das heißt, die Heißluftzufuhr und deren Temperatur einschließlich der Meerwassertemperatur im Behälter werden so abgestimmt, dass der gesättigte Luftstrom mit 100 °C austritt.

Nach einer weiteren bevorzugten Ausgestaltung des Verfahrens wird dem Behälter durch den Kondensator vorgewärmtes Meerwasser, insbesondere mit einer Temperatur von 20 °C bis 80 °C, zugeführt. Diese Erwärmung des Meerwassers beschleunigt den Verdunstungsprozess im Behälter, wodurch ein höherer Wirkungsgrad der Meerwasserentsalzungsvorrichtung zur Erzeugung von einem Destillat, also Frischwasser, ermöglicht wird.

Nach einer weiteren bevorzugten Ausgestaltung des Verfahrens wird in einem Behälter ein Füllstandsniveau des Meerwassers konstant gehalten. Dadurch bleibt das Volumen des Verdampfungsraumes oberhalb des Meerwasserspiegels im Behälter konstant. Bevorzugt ist dabei vorgesehen, dass durch Öffnen einer Ablaufleitung am Behälter das Flüssigkeitsniveau geregelt wird.

Nach einer weiteren bevorzugten Ausgestaltung des Verfahrens wird die Aufheizstation mit Sonnenenergie betrieben. Dabei sind insbesondere Solarabsorber vorgesehen. Beispielsweise kann über sogenannte Solarabsorptionselemente oder Solarabsorber ein zumeist flüssiges Wärmeträgermedium aufgeheizt werden, welches der Aufheizvorrichtung zugeführt wird, um den Luftstrom zu erhitzen. Alternativ kann anstelle der Speisung der Aufheizstation über ein flüssiges oder gasförmiges Wärmeträgermedium eine Aufheizung durch Strom erfolgen. In einem solchen Fall wird mittels der Sonnenenergie durch Photovoltaikelemente Strom erzeugt, welcher zum Betrieb der Vorrichtung für die Meerwasserentsalzung eingesetzt wird. Durch die Erzeugung von Solarstrom kann des Weiteren bevorzugt die Pumpeinrichtung zur Förderung von Meerwasser aus dem Meer bereitgestellt werden. Gleichzeitig kann ein solcher Photovoltalkstrom dazu eingesetzt werden, um eine Steuerung für die Vorrichtung zur Meerwasserentsalzung anzusteuern. Beispielsweise kann das Öffnen und Schließen der Ablaufleitung zur Konstanthaltung des Füllstandniveaus vom Meerwasser im Behälter angesteuert werden. Ebenso kann die Durchflussmenge von Meerwasser durch den Kondensator über die Fördermenge der Pumpeinrichtung oder durch ein separates Ventil gesteuert werden. Analoges gilt für die zugeführte Menge an Meerwasser in den Behälter. Zusätzlich zu dem vom Kondensator abgeführten und erwärmten Meerwasser kann dem Druckbehältnis auch unmittelbar frisch angesaugtes Meerwasser zugeführt werden.

Alternativ kann die Aufheizvorrichtung mit einer Restenergie oder einer Restwärme aus einem vorgeschalteten Verarbeitungsprozess, insbesondere aus der Müllverwertung, gespeist werden. Insbesondere bei der Müllverwertung von Sondermüll aus Raffinerien, wie beispielsweise Ölschlammreste mit Teer und Öl, werden durch die Verbrennung, beispielsweise in einem Kupolofen, erhebliche Restenergiemengen beziehungsweise Restwärme erzeugt. Diese kann der Aufheizvorrichtung zur Erwärmung oder Erhitzung des Luftstromes zugeführt werden. Diese Restenergie kann auch zur Stromerzeugung eingesetzt werden. Somit kann eine solche Meerwasserentsalzungsanlage unabhängig von Fremdenergie, insbesondere fossilen Brennstoffen, betrieben werden. Die Verbrennung von solchen Ölschlammresten mit Teer und Öl erfolgt zumeist auf Schiffen, auf denen auch das Verfahren zur Meerwasserentsalzung durchgeführt werden kann.

Eine weitere bevorzugte Ausgestaltung des Verfahrens sieht vor, dass die Aufheizstation mit einem Latentwärmespeicher gekoppelt ist und die regenerative Energie oder Restenergie oder Restwärme dem Latentwärmespeicher zugeführt wird. Dadurch kann eine Destillation beziehungsweise Meerwasserentsalzung rund um die Uhr erfolgen, unabhängig von der Gewinnung an Energie durch das Sonnenlicht oder durch einen vorgeschalteten Prozess, dessen Restwärme oder Restenergie genutzt wird.

Die der Erfindung zugrunde liegende Aufgabe wird des Weiteren durch eine Vorrichtung zur Meerwasserentsalzung gemäß den Merkmalen des Anspruchs 10 gelöst. Weitere vorteilhafte Ausgestaltungen und Weiterbildungen sind in den weiteren abhängigen Ansprüchen angegeben.

Die Vorrichtung zur Meerwasserentsalzung sieht vor, dass zumindest die Komponenten Aufheizstation, Behälter, Kondensator sowie Auffangbehälter für das Destillat als eine gemeinsame transportierbare Einheit ausgebildet sind. Dadurch kann diese Vorrichtung als Modul, insbesondere auf einer Montageplatte oder Plattform, ausgebildet werden. Beispielsweise kann ein solches Modul in Transportcontainern integriert sein. Ebenso kann ein solches Modul auf Schiffen vorgesehen sein. Darüber hinaus kann auch ein solches Modul auf Ölplattformen, einzelnen Inseln oder in Küstenregionen Einsatz finden. Diese Vorrichtung weist den Vorteil auf, dass eine kompaktbauende und im Aufbau einfach gestaltete Vorrichtung zur Destillation von Meerwasser oder Salzwasser zu Frischwasser geschaffen ist. Darüber hinaus ist der Betrieb dieser Meerwasseranlage durch Aufheizung eines Luftstromes einfach und kontrolliert durchzuführen. Zum Betrieb dieser Vorrichtung ist somit lediglich erforderlich, dass eine regenerative Energie oder eine Restenergie oder Restwärme aus einem Verarbeitungsprozess einer Aufheizstation zur Erwärmung oder Erhitzung eines Luftstromes zugeführt wird. Weitere technische Voraussetzungen oder chemische Bestandteile sowie Verschleißteile sind nicht erforderlich.

Bevorzugt ist an dem Kondensator eine Ansaugleitung für Meerwasser und vorzugsweise zwischen einer Ansaugöffnung der Ansaugleitung und dem Kondensator eine Pumpeinrichtung und/oder ein Filter vorgesehen. Dadurch wird der Betrieb einer solchen Vorrichtung noch weiter vereinfacht, da das zur Entsalzung vorgesehene Meerwasser gleichzeitig als Kühlmedium für den Kondensator benutzt wird.

Die Vorrichtung weist vorteilhafterweise eine Aufheizstation auf, die als Wärmetauscher ausgebildet ist, an welcher zumindest eine Anschlussleitung zum Zuführen von erhitzten Medien vorgesehen ist. Dadurch kann beispielsweise ein flüssiges Wärmeträgermedium einer Solaranlage zugeführt werden, welches in einem Solarabsorber oder bei der sogenannten Solarthermie aufgeheizt wird. Ebenso kann ein gasförmiges Trägermedium zugeführt werden, beispielsweise eine Restwärme aus einer Müllverwertung.

Bevorzugt umfasst eine solche transportierbare Einheit einen Latentwärmespeicher, der die von außen zugeführte Energie, insbesondere

Wärmeenergie, speichert und die Aufheizstation mit Energie versorgt. Dadurch kann die Betriebsdauer unabhängig von der Sonnenscheindauer oder der Betriebsdauer des Verarbeitungsprozesses sein und somit die Menge an Frischwassergewinnung erhöht werden.

Nach einer weiteren bevorzugten Ausgestaltung ist zum autarken Betrieb der Vorrichtung eine Solaranlage anschließbar, welche Strom und/oder Wärme zum Betreiben der Aufheizstation und/oder der Pumpeinrichtung und/oder einer Steuerung erzeugt. Durch die Verbindung der Solaranlage mit der Vorrichtung zur Meerwasserentsalzung kann ein vollständig autarkes System geschaffen werden. Die zum Betrieb der Vorrichtung erforderliche Energie wird über die Sonnenenergie geliefert. Dabei wird bevorzugt zum einen Wärme dem Latentwärmespeicher oder der Aufheizstation zugeführt und Strom für die Pumpeinrichtung und gegebenenfalls für eine Steuerung erzeugt. Gleichzeitig ist eine wartungsarme autarke Vorrichtung zur Meerwasserentsalzung vorgesehen.

Es versteht sich, dass das vorbeschriebene Verfahren und die vorbeschriebene Vorrichtung auch zum Einsatz für die Aufbereitung von Schmutz- oder Brackwasser vorgesehen sein können.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigt:
- Figur 1: eine schematische Ansicht der erfindungsgemäßen Vorrichtung zur Meerwasserentsalzung und
- Figur 2: eine schematische Ansicht einer alternativen Vorrichtung zu Figur 1.

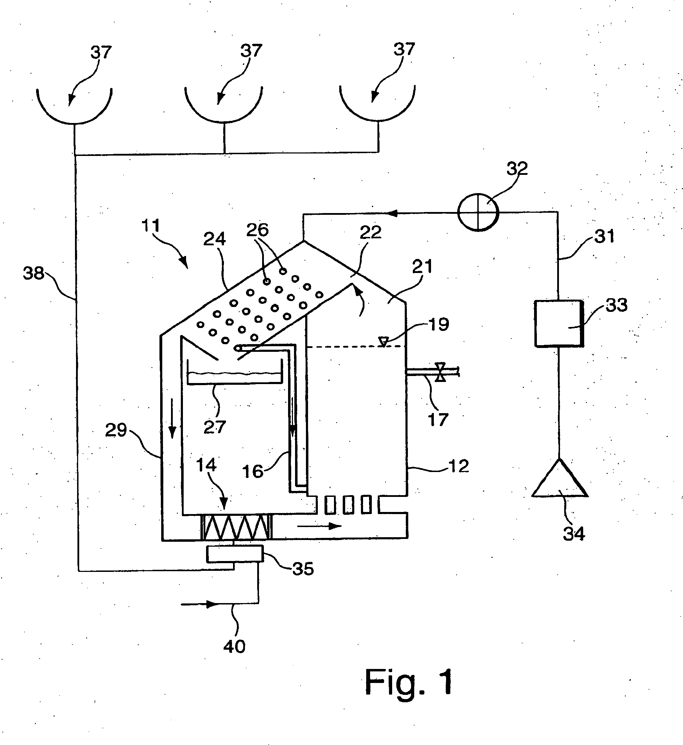

In Figur 1 ist eine schematische Ansicht einer Vorrichtung 11 zur Meerwasserentsalzung dargestellt. Diese Vorrichtung 11 umfasst einen Behälter 12, der mit Meerwasser zur Entsalzung befüllt ist. Diesem Behälter 12 vorgeschalten ist eine Aufheizstation 14, durch welche ein Luftstrom aufgeheizt wird, der in den Behälter 12 eingeblasen wird. Diese Aufheizstation 14 ist in einer Ausführungsform als Wärmetauscher ausgebildet. Hierbei kann es sich um einen Gleichstrom- oder Gegenstromwärmetauscher handeln. Alternative Aufheizvorrichtungen sind ebenfalls möglich. Der Behälter 12 weist des Weiteren eine Zulaufleitung 16 auf, welche Meerwasser dem Behälter 12 zuführt. Des Weiteren ist oberhalb der Zulaufleitung 16 eine Ablaufleitung 17 vorgesehen, um verbrauchtes Meerwasser beziehungsweise Sole abzuführen, welche während der Destillation des Meerwassers sich bildet. Der Behälter 16 wird bevorzugt drucklos betrieben.

Der Behälter 12 wird während der Meerwasserentsalzung auf einem Füllstandsniveau gehalten, dessen niedrigstes Niveau jedenfalls oberhalb der Ablaufleitung 17 liegt. Der Füllstand 19 ist dabei derart vorgesehen, dass ein genügend großverbleibender Verdampfungsraum 21 in dem Behälter 12 verbleibt. Von dem Verdampfungsraum 21 zweigt eine Versorgungsleitung 22 ab und führt den in dem Verdampfungsraum 21 gebildeten Dampf einem Kondensator 24 zu. Dieser Kondensator 24 weist eine Vielzahl von Kühlschlangen 26 auf. An den Kühlschlangen 26 kondensiert der Dampf aus dem Verdampfungsraum 21 und das Kondensat wird als Destillat, also Frischwasser, in einem Auffangbehältnis 27 gesammelt. Alternativ kann über eine Ablaufleitung das Destillat in einen außerhalb der Vorrichtung 12 angeordneten Sammelbehälter geführt oder in ein Trinkwässernetz eingespeist werden.

Vom Kondensator 24 führt ein Luftströmungskanal 29 zur Aufheizstation 14. Über diesen Luftströmungskanal 29 wird der abgekühlte Dampf beziehungsweise erwärmte Luftstrom der Aufheizstation 14 zugeführt. Somit ist ein geschlossener Kreislauf für die Luftströmung beziehungsweise Luft gegeben, welche durch den Behälter 12 hindurchgeführt wird, über den Verdampfungsraum 21 durch den Kondensator 24 hindurchgeführt und über den Luftströmungskanal 29 wieder zur Aufheizstation 14 zurückgeführt wird.

Das zur Gewinnung von Frischwasser vorgesehene Meerwasser wird über eine Ansaugöffnung 34 einer Ansaugleitung 31 durch eine Pumpe beziehungsweise Pumpeinrichtung 32 angesaugt und dem Kondensator 24 zugeführt. Bevorzugt kann der Pumpe 32 vorgeschalten ein Filter 33 angeordnet sein, so dass nur gereinigtes Meerwasser der Vorrichtung 11 zugeführt wird. Das durch die Ansaugleitung 31 angesaugte Meerwasser durchströmt die Kühlschlangen 26 des Kondensators 24 und wird am Ausgang des Kondensators 24 abgeführt und über die Zulaufleitung 16 dem Behälter 12 zugeführt.

Die Aufheizstation 14 umfasst bevorzugt einen Latentwärmespeicher 35, der eine Energie- beziehungsweise Restwärme für den Wärmetauscher in der Aufheizstation 14 bereitstellt. Dieser Latentwärmespeicher 35 kann gemäß einem ersten Ausführungsbeispiel durch Solarenergie aufgeheizt werden. Beispielsweise können Parabolspiegel 37 vorgesehen sein, welche ein Wärmeträgermedium, insbesondere ein flüssiges Wärmeträgermedium, aufheizen. Dieses wird über eine Versorgungsleitung 38 zum Latentwärmespeicher 35 geführt, so dass dieser die zugeführte Wärme aufnehmen kann. Bevorzugt sind sogenannte Solarthermleanlagen vorgesehen. Diese werden auch als Sonnenkollektoren- oder Sonnenwärmekraftwerke bezeichnet. Alternativ oder zusätzlich können auch Photovoltaikanlagen vorgesehen sein, die den erzeugten Strom in die Aufheizstation einspeisen und diese betreiben, um den Luftstrom zu erhitzen. Der durch die Photovoltaikanlage erzeugte Strom wird bevorzugt in einem Akkumulator gespeichert, so dass in Analogie zum Latentwärmespeicher auch eine Stromversorgung zumindest für die Pumpeinrichtung 32 außerhalb der Sonnenscheindauer ermöglicht ist.

Anstelle des Betriebes der Aufheizstation 14 mit Sonnenenergie kann diese auch aus einer Restenergie oder Restwärme eines weiteren Prozesses und über die Leitung 40 betrieben werden. Beispielsweise kann eine Restenergie oder Restwärme aus einer Müllverwertung zum Aufheizen des Latentwärmespeichers 35 oder zum Betrieb des Wärmetauschers der Aufheizstation 14 erfolgen. Insbesondere beim Verbrennen von Sondermüll aus Raffinerien, wie beispielsweise Ölschlammreste mit Teer und Öl, werden aufgrund des dort eingesetzten Verbrennungsverfahrens mit einem Kupolofen erhebliche Mengen an Restwärme frei, die in dem Latentwärmespeicher 35 gespeichert werden oder zur Aufheizung der Luft durch den Wärmetauscher dienen können. Weitere alternative regenerative Energien können ebenfalls bereitgestellt werden. Diese Restwärme beziehungsweise Restenergie kann wiederum einen Generator betreiben, der zur Erzeugung von Strom vorgesehen ist, um beispielsweise die Pumpeinrichtung 32 und gegebenenfalls eine Steuerung der Vorrichtung 11 zu betreiben.

Zur Gewinnung von Trinkwasser wird in der Aufheizstation 14 der Luftstrom erhitzt, wobei bevorzugt eine Erwärmung des Luftstromes zwischen 110 °C und 140 °C vorgesehen ist. Diese erhitzte Luft wird in den Behälter 12 eingeblasen, welche das Meerwasser durchströmt. Der Luftstrom wird bevorzugt mit einem Druck in den Behälter eingeblasen, der größer als die wirkende Meerwassersäule im Behälter ist. Dieser Druck kann durch einen Kolbenmotor oder dergleichen erzeugt werden, der wiederum durch die regenerative Energie oder Restwärme betrieben wird. Im Verdampfungsraum 21 bildet sich ein gesättigter Dampf bei circa 100 °C aus. Dieser Dampf wird dem Kondensator 24 zugeführt, der aufgrund des zugeführten Meerwassers abgekühlt wird. Bevorzugt wird Meerwasser aus einer Tiefe von mehr als 20 m, insbesondere mehr als 30 m, entnommen. In tieferen Bereichen ist das Meerwasser kühl, beispielsweise beträgt die Temperatur 10 °C bei einer Entnahmetiefe von circa 40 m. Nachdem beispielsweise 10 °C kühles Meerwasser die Kühlschlangen 26 durchlaufen hat, wird dieses mit einer Eintrittstemperatur von circa 20 °C bis 80 °C dem Behälter zugeführt. Die Eintrittstemperatur des Meerwassers in den Behälter 12 kann dadurch eingestellt werden, indem Durchströmungsgeschwindigkeiten des frischen Wassers durch die Kühlschlangen angesteuert werden. Der im Kondensator 24 abgekühlte Dampf wird noch als erwärmter Restluftstrom über den Luftströmungskanal 29 der Aufheizstation 14 zugeführt. Dadurch kann eine geringere Wärmemenge genügen, um diesen wiederum auf seine Ausgangstemperatur zu Beginn der Meerwasserentsalzung überzuführen.

Dem Behälter 12 wird aufgrund des Kühlbetriebes des Kondensators 24 über die Zulaufleitung 16 quasi kontinuierlich frisches und bevorzugt gereinigtes Meerwasser zugeführt. Über einen Füllstandsensor wird bevorzugt der Füllstand 19 überwacht und abgefragt, so dass dieser im Wesentlichen auf einem gleichbleibenden Niveau verbleibt. Hierzu wird entsprechend die Ablaufleitung 17 angesteuert, um ein zu starkes Ansteigen des Füllstandsniveaus 19 zu vermeiden. In einer konstruktiv einfachen Ausführungsform kann das Füllstandsniveau 19 auf gleicher Höhe wie die Ablaufleitung 17 vorgesehen sein. Somit verbleibt der Verdampferraum 21 in seiner Größe konstant, so dass zu viel zugeführtes Meerwasser in den Behälter 12 von selbst abfließt.

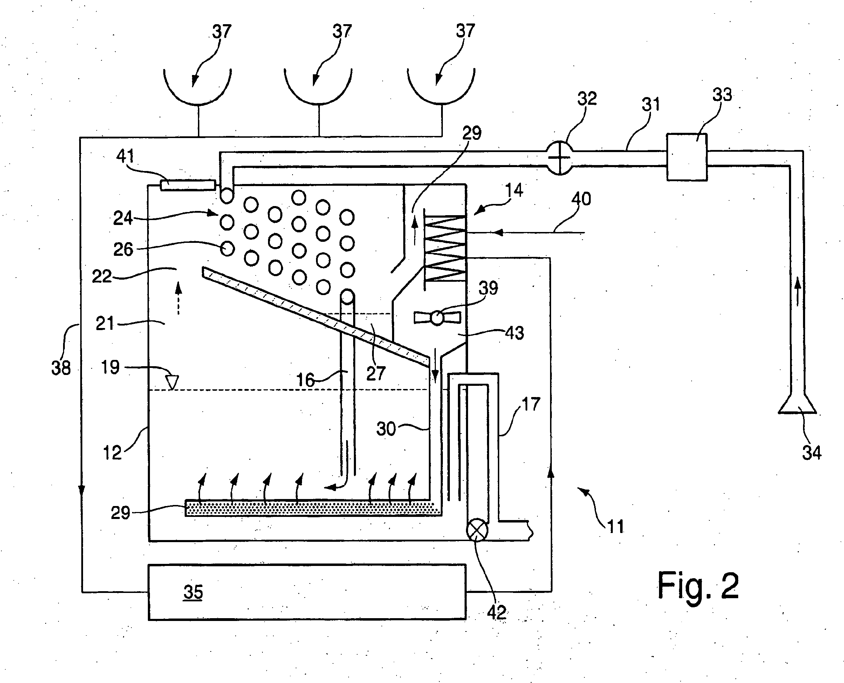

In Figur 2 ist eine alternative Ausführungsform der erfindungsgemäßen Vorrichtung 11 zur Meerwasserentsalzung dargestellt. Diese alternative Vorrichtung 11 umfasst dem Grunde nach dieselben Komponenten wie die Vorrichtung 11 gemäß Figur 1, so dass darauf Bezug genommen wird. Nachfolgend werden lediglich die Abweichungen näher beschrieben.

Die vorliegende Vorrichtung 11 gemäß Figur 2 umfasst einen besonders kompakten Aufbau, der sich insbesondere eignet, in einem Container angeordnet zu werden. Solche Container können bspw. vor Ort aufgestellt oder auf Schiffen oder Ölplattformen oder dergleichen angeordnet werden.

Bei der Vorrichtung 11 gemäß Figur 2 ist vorgesehen, dass im unteren Abschnitt des Behälters 12 das zu entsalzende Meerwasser aufgenommen wird. Dieses zu entsalzende Meerwasser wird über eine Ansaugöffnung 34 über die Ansaugleistung 31 dem Kondensator 24 zugeführt, der im oberen Bereich des Behälters 12 oberhalb des Meerwasserspiegels im Behälter 12 positioniert ist. Dieses gekühlte, aus dem Meer entnommene Meerwasser durchläuft die einzelnen Kühlschlangen 26 und wird über die Zulaufleitung 16 nach dessen teilweisen Erwärmung dem unteren Bereich des Behälters 12 zugeführt.

Die Aufheizstation 14 ist bei dieser Ausführungsform ebenfalls im oberen Bereich des Behälters 12 vorgesehen und wird bspw. über einen Latentwärmespeicher 35 versorgt, der wiederum durch Solarenergie aufgeheizt wird. Diese Aufheizstation 14 kann ebenfalls wie die Aufheizstation 14 gemäß Figur 1 auch nur durch eine Restenergie oder Restwärme eines weiteren Prozesses, wie bspw. bei der Müllverwertung entsteht, aufgeheizt werden, indem diese Restenergie über eine Leitung 40 zugeführt wird. Von der Aufheizstation 14 aus erstreckt sich ein Strömungskanal 30 in den unteren Bereich des Behälters 12 unterhalb eines Füllstandes 19 des Meerwassers und weist Öffnungen auf, so dass die aufgeheizte Luft in das Meerwasser eingeblasen oder eingedrückt werden kann. Dieser Prozess kann dadurch erzielt werden, dass bspw. eine Pumpe oder ein Ventilator vorgesehen ist, der die heiße Luft über den Luftströmungskanal 30 in das gespeicherte Meerwasser eindrückt. Bevorzugt ist ein Luftsprührohr 39 der Aufheizstation 14 nachgeschalten, durch welches bereits entsalztes Wasser in einen Raum 43 eingesprüht wird. Aufgrund der im Raum 43 sich befindlichen erhitzten Luft wird das eingesprühte Wasser kondensiert. Dadurch erhöht sich der Dampfdruck im Raum 43. Ein solcher Dampfdruck reicht aus, um die heiße Luft über den Luftströmungskanal 30 in das gespeicherte Meerwasser einzudrücken.

Aufgrund der in das Meerwasser eingedrückten und erhitzten Luft erfolgt ein Erwärmen und ein Verdampfen des Meerwassers, wobei bspw. das Eindrücken von einer heißen Luft von ca. 110° - 140° genügt, um ein gesättigter Dampf mit 100° über einen Versorgungsabschnitt 22 dem Kondensator 24 zuzuführen. An den Kühlschlangen 26 des Kondensators 24 kondensiert der zugeführte Dampf. Das Kondensat 27 wird in dem dargestellten Bereich aufgefangen und abgeleitet. Der weitere, teils abgekühlte Dampf bzw. die noch heiße Luft wird über den Luftströmungskanal 29 der Aufheizstation 14 zugeführt und erneut aufgeheizt.

Somit ist bei dieser Vorrichtung 11 ebenfalls ein geschlossener Kreislauf gegeben, der darüber hinaus eine kompakte Anordnung aufweist.

Ergänzend ist oberhalb des Füllstandes 19 eine Ablaufleitung 17 vorgesehen. Sobald das Meerwasser über den Füllstand 19 steigt, fließt das gespeicherte Meerwasser über die Ablaufleitung 17 ab. Eine zusätzliche Anordnung von einem Ventil ist nicht erforderlich. Im unteren Bereich des Behälters 12 ist bevorzugt ein Auslauf 42 vorgesehen, der insbesondere manuell betätigbar ist, so dass eine vollständige Entleerung des Behälters 12 im Bedarfsfall, wie beispielsweise zur Reinigung, erfolgen kann. Dieser-Auslauf 42 mündet ebenfalls in die Ablaufleitung 17, welche das Meerwasser in das Meer zurückführt.

Des Weiteren kann bevorzugt an einem oberen Abschnitt des Behälters 12 eine Wartungsöffnung 41 vorgesehen sein, um Wartungs- und Reinigungsarbeiten durchzuführen. Dies gilt auch für die Vorrichtung gemäß Figur 1.

Diese Meerwasserentsalzung erfolgt nach dem Prinzip der Zwangs-Destillation und besteht aus konstruktiv einfach aufgebauten Komponenten, die wartungsarm sind. Darüber hinaus ist ein flexibler und autarker Einsatz ermöglicht, da die Zuführung der Energie oder Wärme zur Aufheizung des Luftstromes für die Destillation zur Meerwasserentsalzung in vielfältiger Weise erfolgen kann.

## Patentansprüche

1. Verfahren zur Meerwasserentsalzung, mit einer Aufheizstation (14), einem mit Meerwasser befüllbaren Behälter (12), einem Kondensator (24) und einem Auffangbehälter (27) oder einer Abführleitung für ein Destillat, wobei die Komponenten als ein Modul als eine gemeinsame transportable Einheit ausgebildet sind,
- bei dem ein Behälter (12) mit Meerwasser befüllt wird, so dass an dessen oberen Ende ein Verdampfungsraum (21) verbleibt,
- bei dem ein Luftstrom in einer dem Behälter (12) stromauf angeordneten Aufheizstation (14) erhitzt und in den Behälter (12) mit Meerwasser mit einem Ventilator oder einer Pumpe eingedrückt wird,
- bei dem ein im Verdampfungsraum (21) des Behälters (12) gebildeter Dampf einem Kondensator (24) zugeführt wird,
- bei dem der Kondensator (24) über eine Ansaugleitung (31) mit Meerwasser oder Salzwasser gespeist wird, und das angesaugte Meerwasser Kühlschlangen (26) des Kondensators (24) durchströmt, am Ausgang des Kondensators (24) abgeführt und über eine Zulaufleitung (16) dem Behälter (12) zugeführt wird,
- bei dem ein an Kühlschlangen (26) des Kondensators (24) im Verdampfungsraum (21) des Behälters (12) kondensiertes Destillat aufgesammelt und gespeichert wird,
- bei dem ein durch den Kondensator (24) vorgewärmtes Meerwasser dem Behälter (12) zugeführt wird,
- bei dem der durch den Kondensator (24) abgekühlte Dampf als vorgewärmter Luftstrom über einen Luftströmungskanal (29) der Aufheizstation (14) zugeführt wird,
- bei dem in der Aufheizstation (14) der Luftstrom erhitzt und anschließend in den Behälter (12) eingeblasen wird, der das Meerwasser durchströmt und
- bei dem in der Aufheizstation (14) der Luftstrom mit regenerativer Energie oder Restenergie aus einem Verarbeitungsprozess aufgeheizt wird.

2. Verfahren nach einem der vorhergehenden Ansprüche, **dadurch gekennzeichnet, dass** das Meerwasser oder Salzwasser aus einer Tiefe von wenigstens 20 m, insbesondere wenigstens 30 m oder mehr, angesaugt wird.

3. Verfahren nach einem der vorhergehenden Ansprüche, **dadurch gekennzeichnet, dass** das Meerwasser durch eine Pumpeinrichtung (32), welche zwischen einer Ansaugöffnung (34) der Ansaugleitung (31) und dem Kondensator (24) positioniert ist, dem Kondensator (24) zugeführt wird.

4. Verfahren nach einem der vorhergehenden Ansprüche, **dadurch gekennzeichnet, dass** der Luftstrom in der Aufheizstation (14) auf eine Temperatur von weniger als 250 °C, insbesondere auf eine Temperatur von 110 °C bis 140 °C, aufgeheizt wird.

5. Verfahren nach einem der vorhergehenden Ansprüche, **dadurch gekennzeichnet, dass** dem Behälter (12) ein durch den Kondensator (24) vorgewärmtes Meerwasser, mit einer Temperatur von 20 °C bis 80 °C zugeführt wird.

6. Verfahren nach einem der vorhergehenden Ansprüche, **dadurch gekennzeichnet, dass** das in einem Behälter (12) vorgesehene Füllstandsniveau (19) des Meerwassers konstant gehalten wird und insbesondere durch Öffnen einer Ablaufleitung (17) des Speicherbehälters (12) geregelt wird.

7. Verfahren nach eine der vorhergehenden Ansprüche, **dadurch gekennzeichnet, dass** zumindest die Aufheizstation (14) mit Sonnenenergie betrieben wird.

8. Verfahren nach Anspruch 1, **dadurch gekennzeichnet, dass** die Restenergie aus einer Müllverwertungsanlage zugeführt wird, bei der bevorzugt Sondermüll aus Raffinerien verbrannt wird.

9. Verfahren nach einem der vorhergehenden Ansprüche, **dadurch gekennzeichnet, dass** die Aufheizstation (14) mit einem Latentwärmespeicher (35) gekoppelt ist und die regenerative Energie oder Restenergie dem Latentwärmespeicher (35) zugeführt wird.

10. Vorrichtung zur Meerwasserentsalzung
- mit einem mit Meerwasser befüllbaren Behälter (12), der eine Zulaufleitung (16) für Meerwasser und eine Ablaufleitung (17) für Sole aufweist,
- mit einer Aufheizstation (14) für einen Luftstrom, der nach dem Erhitzen in den Behälter (12) zum Durchströmen des Meerwassers mit einem Ventilator oder einer Pumpe zugeführt wird, wobei der Behälter (12) einen Strömungskanal (30) aufweist, der in einen unteren Bereich des Behälters (12) führt und Öffnungen aufweist, durch welche der Luftstrom in das Meerwasser eingeblasen wird,
- mit einem Kondensator (24), der über eine vom Verdampfungsraum (21) des Behälters (12) abführende Versorgungsleitung (22) mit Dampf gespeist wird, der eine Ansaugleitung (31) zur Speisung von Kühlschlangen /26) des Kondensators (24) mit Meerwasser oder Salzwasser aufweist und ein Ablauf des Kondensators (24) über die Zulaufleitung (16) mit dem Behälter (12) verbunden ist, welche das Meerwasser oder Salzwasser in den Behälter (12) führt,
- mit einem Auffangbehälter (27) im Behälter (12) zum Auffangen eines im Kondensator (24) gebildeten Destillats oder mit einer Abführleitung zum Abführen des Destillats,
- mit einem von dem Kondensator (24) zur Aufheizstation (14) führenden Luftströmungskanal (29) für den aus dem Kondensator (24) austretenden und abgekühlten Luftstrom,
- wobei die Komponenten Aufheizstation (14), Behälter (12), Kondensator (24) sowie Auffangbehälter (27) oder Abführleitung für das Destillat als ein Modul als eine gemeinsame transportierbare Einheit ausgebildet sind.

11. Vorrichtung nach Anspruch 10, **dadurch gekennzeichnet, dass** an dem Kondensator (24) eine Ansaugleitung (31) für Meerwasser vorgesehen ist, welche vorzugsweise zwischen einer Ansaugöffnung der Ansaugleitung und dem Kondensator (24) eine Pumpeinrichtung (32) und/oder einen Filter (33) aufweist.

12. Vorrichtung nach einem der Ansprüche 10 oder 11, **dadurch gekennzeichnet, dass** die Aufheizstation (14) als Wärmetauscher ausgebildet ist, an welcher zumindest ein Anschluss zum Zuführen von einem erhitzten Medium vorgesehen ist.

13. Vorrichtung nach Anspruch 12, **dadurch gekennzeichnet, dass** ein Latentwärmespeicher (35) vorgesehen ist, der die von außen zugeführte Energie, insbesondere Wärmeenergie oder Restwärme, speichert und die Aufheizstation (14) versorgt.

14. Vorrichtung nach einem der Ansprüche 13, **dadurch gekennzeichnet, dass** zum autarken Betrieb eine Solaranlage anschließbar ist, welche Strom und/oder Wärme zum Betreiben der Aufheizstation (14) und der Pumpeinrichtung (32) erzeugt.

## Claims

1. A method for desalinating sea water including a heating station (14), a container (12) that may be filled with sea water, a condenser (24), and a collection container (27) or a discharge pipe for a distillate, said components being realised in modular form as a combined transportable unit,
- wherein a container (12) is filled with sea water such that an evaporation space (21) will remain at the upper end thereof,
- wherein an air flow is heated at a heating station (14) disposed upstream of the container (12) and is pressed into the seawater-filled container (12) using a blower or a pump,
- wherein a vapour formed in the evaporation space (21) of the container (12) is led to a condenser (24),
- wherein the condenser (24) is fed with sea water or salt water via a suction pipe (31) and the sucked-in seawater is passed through cooling coils (26) of the condenser (24), discharged at the exit of the condenser (24), and fed to the container (12) via a feed pipe (16),
- wherein a distillate formed by condensation on the cooling coils (26) of the condenser (24) in the evaporation space (21) of the container (12) is collected and stored,
- wherein sea water pre-heated by the condenser (24) is fed to the container (12),
- wherein the vapour that has been cooled by the condenser (24) is fed to the heating station (14) as a pre-heated air flow via an airflow channel (29),
- wherein said air flow is heated in the heating station (14) and is then blown into the container (12) so as to flow through the sea water, and
- wherein the heating station (14) heats the air flow using regenerative energy or residual energy from a treatment process.

2. The method as claimed in any of the preceding claims, **characterised in that** the sea water or salt water is sucked in at a depth of at least 20 m, in particular at least 30 m or more.

3. The method as claimed in any of the preceding claims, **characterised in that** the sea water is fed to the condenser (24) by means of a pumping device (32) which is positioned between a suction opening (34) of the suction pipe (31) and the condenser (24).

4. The method as claimed in any of the preceding claims, **characterised in that** in the heating station (14), the air flow is heated to a temperature of less than 250 °C, in particular to a temperature of between 110 °C and 140 °C.

5. The method as claimed in any of the preceding claims, **characterised in that** sea water pre-heated by the condenser (24) is fed to the container (12) at a temperature of between 20 °C and 80 °C.

6. The method as claimed in any of the preceding claims, **characterised in that** a given fill level (19) of sea water within a container (12) is kept constant and is controlled in particular by opening a drain pipe (17) of the storage container (12) .

7. The method as claimed in any of the preceding claims, **characterised in that** at least the heating station (14) is operated by solar energy.

8. The method as claimed in claim 1, **characterised in that** the residual energy is supplied from a waste utilisation plant in which preferably hazardous waste from refineries is incinerated.

9. The method as claimed in any of the preceding claims, **characterised in that** the heating station (14) is coupled to a latent-heat storage unit (35) and **in that** the regenerative energy or residual energy is fed to said latent-heat storage unit (35).

10. An apparatus for desalinating sea water, including
- a container (12) that may be filled with sea water and has a feed pipe (16) for sea water and a drain pipe (17) for brine,
- a heating station (14) for an air flow which, after having been heated, is fed to the container (12) using a blower or a pump so as to be passed through the sea water, said container (12) having a flow channel (30) leading to a lower region of the container (12) and having openings through which the air flow is blown into the sea water,
- a condenser (24) which is fed with vapour via a supply pipe (22) leading away from the evaporation space (21) of the container (12), which has a suction pipe (31) for feeding sea water or salt water to cooling coils (26) of the condenser (24), a drain of the condenser (24) being connected with the container (12) via a feed pipe (16) which feeds the sea water or salt water into the container (12),
- a collection container (27) provided in the container (12) for collecting a distillate formed in the condenser (24) or a discharge pipe for discharging said distillate,
- an air flow duct (29) that leads from the condenser (24) to the heating station (14) being provided for the cooled air flow exiting the condenser (24),
- the components comprising the heating station (14), the container (12), the condenser (24), and the collection container (27) or discharge pipe for the distillate being realised in modular form as a combined transportable unit.

11. The apparatus as claimed in claim 10, **characterised in that** the condenser (24) is provided with a suction pipe (31) for sea water which has a pumping device (32) and/or a filter (33) arranged preferably between a suction opening of the suction pipe and the condenser (24).

12. The apparatus as claimed in any one of claims 10 or 11, **characterised in that** the heating station (14) is realised as a heat exchanger provided with at least one inlet port for feeding a heated fluid.

13. The apparatus as claimed in claim 12, **characterised in that** a latent-heat storage unit (35) is provided which stores the externally supplied energy, in particular thermal energy or residual heat, and supplies it to the heating station (14).

14. The apparatus as claimed in claim 13, **characterised in that** for autonomous operation, a solar system may be connected so as to generate electrical current and/or heat for operating the heating station (14) and the pumping device (32).

## Revendications

1. Procédé destiné au dessalement de l'eau de mer, avec une station de chauffage (14), un réservoir (12) pouvant être rempli d'eau de mer, un condenseur (24) et un réservoir de récupération (27) ou un conduit d'évacuation pour un distillat, les composants étant réalisés en tant que module sous la forme d'une unité transportable commune, procédé lors duquel
- un réservoir (12) est rempli d'eau de mer de sorte qu'il reste un espace d'évaporation (21) à son extrémité supérieure,
- un flux d'air est chauffé dans une station de chauffage (14) disposée en amont du réservoir (12) et est insufflé à l'aide d'un ventilateur ou d'une pompe dans le réservoir (12) contenant de l'eau de mer,
- une vapeur formée dans l'espace d'évaporation (21) du réservoir (12) est amenée à un condenseur (24),
- le condenseur (24) est alimenté en eau de mer ou en eau salée par un conduit d'aspiration (31) et l'eau de mer aspirée circule à travers des serpentins de refroidissement (26) du condenseur (24), est évacuée à la sortie dudit condenseur (24) et est amenée au réservoir (12) par un conduit d'amenée (16),
- un distillat obtenu par condensation sur des serpentins de refroidissement (26) du condenseur (24) dans l'espace d'évaporation (21) du réservoir (12) est recueilli et stocké,
- une eau de mer préchauffée par le condenseur (24) est amenée au réservoir (12),
- la vapeur refroidie par le condenseur (24) est amenée en tant que flux d'air préchauffé à la station de chauffage (14) par un canal d'écoulement d'air (29),
- dans la station de chauffage (14), le flux d'air est chauffé, puis insufflé dans le réservoir (12), traversant alors l'eau de mer et
- dans la station de chauffage (14), le flux d'air est chauffé par de l'énergie régénérative ou de l'énergie résiduelle issue d'un processus de traitement.

2. Procédé selon l'une quelconque des revendications précédentes, **caractérisé en ce que** l'eau de mer ou l'eau salée est aspirée à une profondeur d'au moins 20 m, en particulier d'au moins 30 m ou plus.

3. Procédé selon l'une quelconque des revendications précédentes, **caractérisé en ce que** l'eau de mer est amenée au condenseur (24) à l'aide d'un dispositif de pompage (32) qui est positionné entre une ouverture d'aspiration (34) du conduit d'aspiration (31) et le condenseur (24).

4. Procédé selon l'une quelconque des revendications précédentes, **caractérisé en ce que** le flux d'air est porté, dans la station de chauffage (14), à une température de moins de 250 °C, en particulier à une température comprise entre 110 °C et 140 °C.

5. Procédé selon l'une quelconque des revendications précédentes, **caractérisé en ce qu'**une eau de mer préchauffée par le condenseur (24) est amenée au réservoir (12) à une température comprise entre 20 °C et 80 °C.

6. Procédé selon l'une quelconque des revendications précédentes, **caractérisé en ce que** le niveau d'eau de mer (19) prévu dans un réservoir (12) est maintenu constant et est réglé en particulier par ouverture d'un conduit d'écoulement (17) du réservoir de stockage (12).

7. Procédé selon l'une quelconque des revendications précédentes, **caractérisé en ce qu'**au moins la station de chauffage (14) fonctionne à l'énergie solaire.

8. Procédé selon la revendication 1, **caractérisé en ce que** l'énergie résiduelle qui est amenée provient d'une installation de traitement de déchets dans laquelle sont brûlés de préférence des déchets dangereux générés par des raffineries.

9. Procédé selon l'une quelconque des revendications précédentes, **caractérisé en ce que** la station de chauffage (14) est couplée à un accumulateur de chaleur latente (35) et que l'énergie régénérative ou l'énergie résiduelle est amenée à l'accumulateur de chaleur latente (35).

10. Dispositif destiné au dessalement de l'eau de mer
- avec un réservoir (12) qui peut être rempli d'eau de mer et qui présente un conduit d'amenée (16) pour l'eau de mer et un conduit d'écoulement (17) pour la saumure,
- avec une station de chauffage (14) pour un flux d'air qui, après avoir été chauffé, est amené dans le réservoir (12) à l'aide d'un ventilateur ou d'une pompe afin de traverser l'eau de mer, le réservoir (12) présentant un canal d'écoulement (30) qui mène dans une zone inférieure du réservoir (12) et présente des ouvertures à travers lesquelles le flux d'air est insufflé dans l'eau de mer,
- avec un condenseur (24) lequel est alimenté en vapeur par un conduit d'alimentation (22) qui part de l'espace d'évaporation (21) du réservoir (12) et lequel présente un conduit d'aspiration (31) pour l'alimentation en eau de mer ou en eau salée de serpentins de refroidissement (26) du condenseur (24), un écoulement du condenseur (24) étant relié au réservoir (12) par le conduit d'amenée (16) qui amène l'eau de mer ou l'eau salée dans le réservoir (12),
- avec un réservoir de récupération (27) situé dans le réservoir (12) afin de recueillir un distillat formé dans le condenseur (24) ou avec un conduit d'évacuation destiné à évacuer ledit distillat,
- avec un canal d'écoulement d'air (29) qui mène du condenseur (24) à la station de chauffage (14) étant prévu pour le flux d'air refroidi sortant du condenseur (24),
- les composants constitués par la station de chauffage (14), le réservoir (12), le condenseur (24) ainsi que le réservoir de récupération (27) ou le conduit d'évacuation pour le distillat étant réalisés en tant que module sous la forme d'une unité transportable commune.

11. Dispositif selon la revendication 10, **caractérisé en ce que** sur le condenseur (24) est prévu un conduit d'aspiration (31) pour l'eau de mer lequel présente, de préférence entre une ouverture d'aspiration du conduit d'aspiration et le condenseur (24), un dispositif de pompage (32) et/ou un filtre (33).

12. Dispositif selon l'une quelconque des revendications 10 ou 11, **caractérisé en ce que** la station de chauffage (14) est réalisée sous forme d'échangeur thermique et présente au moins un raccord pour l'amenée d'un fluide chauffé.

13. Dispositif selon la revendication 12, **caractérisé en ce qu'**il est prévu un accumulateur de chaleur latente (35) qui stocke de l'énergie amenée de l'extérieur, en particulier de l'énergie thermique ou de l'énergie résiduelle et alimente la station de chauffage (14).

14. Dispositif selon la revendication 13, **caractérisé en ce qu'**il est possible, pour le fonctionnement autonome, de brancher une installation solaire qui produit du courant et/ou de la chaleur pour le fonctionnement de la station de chauffage (14) et du dispositif de pompage (32).
